# DEMANDE DE BREVET EUROPEEN

(11) **EP 2 402 871 A1**
(43) Date de publication de la demande: **04.01.2012**
(21) Numéro de dépôt: 11170369.0
(22) Date de dépôt: 17.06.2011
(51) Int. Cl.: G06F 17/30, H04L 29/08, G06F 3/06

(54) **Gestion du lieu de stockage de données dans un système de stockage distribué**

(30) Priorité: 29.06.2010 FR 1055257
(71) Demandeur: FRANCE TELECOM, 75015 Paris (FR)
(72) Inventeur: Baranski, Fabrice, 35000 RENNES (FR)

(57) **Abrégé**

L'invention se rapporte à un procédé de gestion du lieu de stockage de données dans un système de stockage distribué (SYS) incluant une pluralité de dispositifs (PC,MOB) reliés entre eux par l'intermédiaire d'un réseau (RES), les dispositifs comprenant un lieu de stockage de données respectif dans lesquels un utilisateur peut stocker des données, caractérisé en ce que la sélection du lieu de stockage de données dans le système est fonction d'une information liée à l'utilisateur du système.

## Description

L'invention se rapporte à un procédé de gestion du lieu de stockage de données dans un système de stockage distribué. Rappelons qu'un système de stockage distribué comprend plusieurs dispositifs de traitement de données reliés entre eux et formant ensemble un espace de stockage unifié.

Les dispositifs de stockage sont des dispositifs de traitement de données incluant au moins un processeur et au moins une mémoire pour stocker des données numériques ci-après désignées par l'expression contenus numériques. Un dispositif de stockage est par exemple un ordinateur, un radiotéléphone, un lecteur/enregistreur par exemple de type MP3 (acronyme du terme anglais "Windows Media Audio"), un disque dur de type NAS (acronyme anglo-saxon de Network Attached Storage), etc.

Le contenu numérique est quelconque. Celui-ci peut être un contenu musical, un programme d'ordinateur, etc.

Aujourd'hui, un utilisateur dispose de différents dispositifs de traitement de données pour stocker un contenu. Il dispose de dispositifs électroniques fixes tels qu'un ordinateur personnel, un disque dur de type NAS, etc. Il dispose aussi de dispositifs électroniques mobiles tels qu'un radiotéléphone, un appareil photo, etc. Enfin, il dispose de dispositifs électroniques, le plus souvent des serveurs, offrant des espaces de stockages en ligne (flickR, box.net, ...) accessibles via un réseau par exemple le réseau Internet.

Ces différents dispositifs sont équipés de ressources physiques et logicielles dont au moins un processeur et au moins un espace de stockage permettant de manipuler localement des contenus, une manipulation incluant une lecture et/ou une écriture de données.

Un système de stockage distribué comprend des dispositifs, tels que ceux décrits ci-dessus, reliés entre eux par l'intermédiaire d'un réseau pour former un espace de stockage unifié. Cet espace constitue par exemple un réseau domestique. En d'autres mots, un utilisateur souhaitant écrire ou lire un contenu dans un système de stockage distribué peut le faire sur un dispositif choisi parmi les dispositifs du système de stockage distribué.

A cet effet, un module de gestion a pour fonction la gestion de la manipulation des données dans l'espace de stockage unifié. Pour cela, le module stocke une liste de contenus, le lieu de stockage de chaque contenu c'est-à-dire le moyen de stockage sur lequel les contenus sont stockées, ainsi que l'emplacement des contenus dans le système de stockage distribué, c'est-à-dire la mémoire. L'emplacement est par exemple si le moyen de stockage est un disque dur, une piste du disque dur et un ou plusieurs secteurs du disque.

Les inventeurs ont constaté que les données étaient stockées soit de manière aléatoire dans le système ou en fonction de critères liés à la nature du contenu.

Or, il arrive que l'utilisateur déconnecte un dispositif du système de stockage distribué pour manipuler des données en mode "hors connexion". Le dispositif n'est plus connecté au réseau formant le système de stockage distribué. Dans cette configuration, dans l'hypothèse où le module est situé hors du dispositif déconnecté, le dispositif déconnecté n'a plus la possibilité d'accéder au module et donc aux données du système de stockage distribué.

L'invention vient améliorer la situation.

A cet effet, l'invention a pour objet un procédé de gestion du lieu de stockage de données dans un système de stockage distribué incluant une pluralité de dispositifs reliés entre eux par l'intermédiaire d'un réseau, les dispositifs comprenant un lieu de stockage de données respectif dans lesquels un utilisateur peut stocker des données, caractérisé en ce que la sélection du lieu de stockage de données dans le système est fonction d'une information liée à l'utilisateur du système.

Ainsi, selon l'invention, les données sont transférées depuis un dispositif source vers un dispositif destinataire si les données en question sont stockées sur un dispositif différent du dispositif sélectionné.

Selon l'invention, une information liée à l'utilisateur est récupérée et sert de base à la sélection du lieu de stockage de données parmi les multiples lieux de stockage formant le système de stockage distribué. Ainsi, comme nous le verrons par la suite, si par exemple l'information est une information liée à l'activité de l'utilisateur vis-à-vis d'un dispositif du système, le dispositif sélectionné sera par exemple le dispositif en cours d'utilisation par l'utilisateur. La sélection du dispositif en cours d'utilisation pour le stockage de données réduit ainsi le temps d'accès aux données car l'accès aux données est réalisé directement localement dans le lieu de stockage du dispositif et non sur un lieu de stockage extérieur au dispositif. L'invention donne aussi la possibilité à l'utilisateur de déconnecter le dispositif concerné du réseau du système de stockage distribué et de manipuler les données suite à la déconnexion.

Ainsi, selon l'invention, lorsque le lieu de stockage est sélectionné et que les données concernées sont stockées sur un autre dispositif que le dispositif sélectionné, les données sont transférées dudit autre dispositif du système vers le dispositif sélectionné.

Comme on l'a vu dans ce qui précède, l'information peut être une information liée à l'activité de l'utilisateur vis-à-vis d'un dispositif. Une activité vis-à-vis d'un dispositif peut être déduite par un microprocesseur installé sur le dispositif en question. Par exemple, une réception d'une commande d'exécution d'un programme particulier peut être suffisante pour déclarer que l'utilisateur utilise le dispositif équipé du microprocesseur.

Dans notre exemple, l'information correspond à un état de l'utilisateur du système défini relativement à un outil de communication interpersonnelle. Nous verrons dans la suite que cet état peut être fictif ou réel.

On n'a vu précédemment que des données pouvaient être transférées d'un dispositif source vers un dispositif destinataire. Le transfert peut prendre plusieurs formes associées à un avantage respectif.

Selon une première forme, suite au transfert, les données stockées dans le dispositif source sont supprimées. Cette caractéristique a pour avantage d'éviter des redondances et ainsi d'optimiser le taux l'occupation de la mémoire dans le système de stockage distribué.

Dans un système de stockage de données distribué, un module gestionnaire est apte à gérer le lieu de stockage des données dans le système de stockage distribué. Dans cette configuration, et selon une deuxième forme, suite au transfert de données depuis un lieu de stockage source vers un lieu de stockage destinataire, les données stockées dans le dispositif source sont conservées, et en ce que si un transfert depuis ledit lieu de stockage destinataire et ledit dispositif source concernent les mêmes données, ledit transfert comprend une étape de mise à jour du nouveau lieu de stockage. L'avantage lié à cette caractéristique est qu'un contenu ayant fait l'objet d'un transfert d'un premier dispositif vers un deuxième dispositif et qui doit faire l'objet d'un nouveau transfert du deuxième dispositif vers le premier dispositif ne sera pas transféré de nouveau. En effet, seul le lieu de stockage sera mis à jour par le gestionnaire. Nous verrons dans notre exemple que le module de gestion aura la charge de cette mise à jour.

Selon un aspect matériel, l'invention se rapporte à un système de stockage distribué incluant une pluralité de lieux de stockage de données comprenant des moyens de stockage respectifs reliés entre eux par l'intermédiaire d'un réseau et dans lesquels un utilisateur peut stocker des données, caractérisé en ce qu'il comprend un module apte à sélectionner un lieu de stockage de données dans le système en fonction d'une information liée à l'utilisateur du système.

Selon un autre aspect matériel, l'invention se rapporte au module précité, celui-ci étant apte à gérer le lieu de stockage de données dans un système de stockage distribué incluant une pluralité de lieux de stockage de données comprenant des moyens de stockage respectifs reliés entre eux par l'intermédiaire d'un réseau et dans lesquels un utilisateur peut stocker des données. Ce module est caractérisé en ce qu'il comprend des moyens de sélection aptes à sélectionner un lieu de stockage de données dans le système en fonction d'une information liée à l'utilisateur du système.

Enfin, l'invention a trait aussi à un programme d'ordinateur comprenant des instructions pour la mise en oeuvre du procédé susmentionné par le module susmentionné, lorsque ce programme est exécuté par un processeur.

L'invention sera mieux comprise à la lecture de la description qui suit, donnée à titre d'exemple et faite en référence aux dessins annexés.

### Les figures:

Les figures 1 et 2 sont des vues schématiques d'un système de stockage distribué à des instants différents.
Les figures 3 et 4 sont des vues d'échanges de données entre des dispositifs du système de stockage distribué illustrant un premier exemple de réalisation de l'invention.
Les figures 5 et 6 sont des vues d'échanges de données entre des dispositifs du système de stockage distribué illustrant un deuxième exemple de réalisation de l'invention.

### Description détaillée d'exemples de réalisation illustrant l'invention

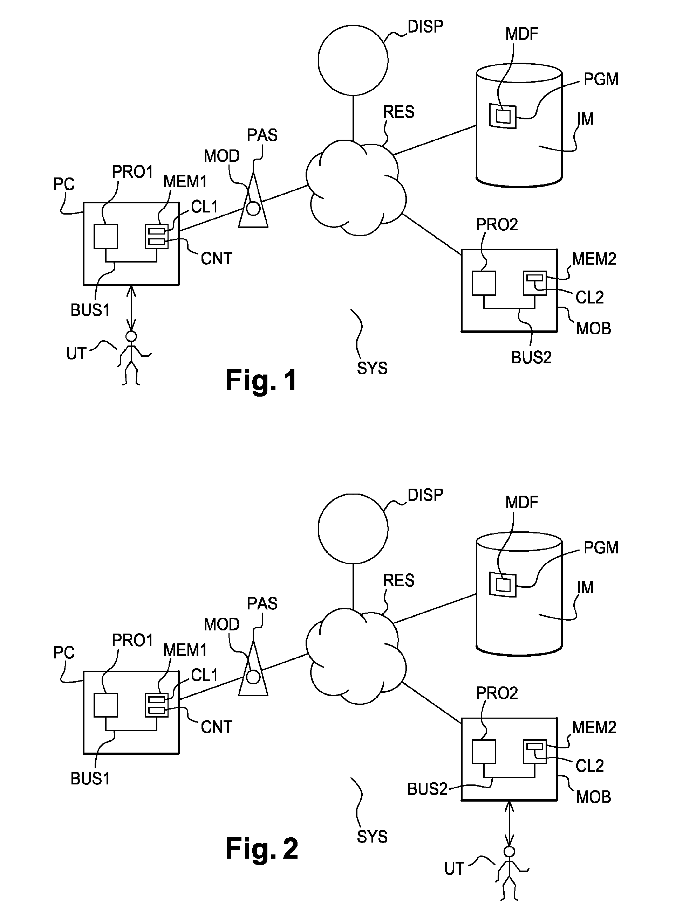

La figure 1 représente un système de stockage de données distribué SYS comprenant une pluralité de dispositifs sur lesquels des contenus peuvent être manipulés. Précisons encore qu'une manipulation inclut l'écriture, la lecture de données dans une mémoire et qu'une écriture inclut la création et la modification de données.

Chaque dispositif dudit système comprend au moins un processeur et à chaque processeur est associée au moins une mémoire pour le stockage de données. La mémoire en question peut être situé à l'intérieur du dispositif ou à l'extérieur et donc accessible au travers d'un moyen de communication tel qu'un réseau de télécommunication. Dans notre exemple, chaque dispositif comprend une mémoire. A noter que le type de mémoire est quelconque.

Dans notre exemple, afin de simplifier l'exposé de l'invention, le système de stockage distribué SYS comprend uniquement deux dispositifs de stockage, un premier dispositif PC illustré au moyen d'un ordinateur personnel, un deuxième dispositif MOB illustré au moyen d'un téléphone mobile.

Dans notre exemple, l'ordinateur PC comprend un processeur PRO1, dit premier processeur, relié à une mémoire MEM1, dite première mémoire, par l'intermédiaire d'un bus BUS1, dit premier bus. Dans notre exemple, le téléphone MOB comprend un processeur PRO2, dit deuxième processeur, relié à une mémoire MEM2, dite deuxième mémoire, par l'intermédiaire d'un bus BUS2, dit deuxième bus.

Chaque dispositif est alimenté par une source d'énergie par exemple par une source d'énergie électrique.

Dans notre exemple, les trois dispositifs sont reliés entre eux par l'intermédiaire d'un réseau RES pour former le système de stockage distribué.

A noter que l'exemple illustre un réseau local, cependant des dispositifs du système de stockage peuvent être situés à distance et accessibles via un réseau adapté par exemple Internet.

Les dispositifs stockent des données de toute sorte. Par exemple, on considère dans notre exemple que l'ordinateur PC stocke un contenu CNT dans la première mémoire MEM1.

Dans notre exemple, un module de gestion MOD a pour fonction la gestion du lieu de stockage des contenus. Pour cela, le module stocke une liste de contenus et le ou les lieux de stockage ainsi que l'emplacement des contenus dans les dispositifs du système de stockage distribué. Par exemple, dans notre illustration, le module stocke un identifiant du contenu CNT, le lieu de stockage à savoir l'ordinateur PC et l'emplacement du contenu en mémoire. De cette façon, lors d'une demande d'accès à un ou plusieurs contenus, le module a connaissance de l'emplacement concerné du ou des contenus dans le système et peut à ce titre fournir le ou les emplacements en question.

Le lieu de stockage du module MOD est quant à lui indifférent. Dans notre exemple, le module est stocké, pour offrir une disponibilité des données optimale, sur le dispositif ayant une durée MTBF (acronyme anglo-saxon de "Mean Time Between Failures") la plus importante c'est-à-dire dont la durée moyenne entre chaque panne est la plus importante. Le module est par exemple sur une passerelle s'intercalant entre l'ordinateur PC et le réseau RES.

Selon l'invention, le lieu de stockage des données va être fonction d'une information liée à l'utilisateur. Dans notre exemple de réalisation, cette information est un statut de l'utilisateur vis-à-vis d'un dispositif respectif du système SYS. Grâce à l'invention, les lieux de stockage de tout ou partie des contenus stockés dans le système de stockage distribué peuvent varier dans le temps en fonction du statut de l'utilisateur. Nous verrons dans la suite de la description des exemples de statuts.

Le statut, réel ou fictif, est lié à l'activité de l'utilisateur. Ce statut peut être celui utilisé dans un système de communication interpersonnelle. Rappelons qu'un statut fictif vise un statut déclaré par l'utilisateur qui ne représente pas forcément la réalité.

A cet effet, dans notre exemple, le système comprend en outre
- Un serveur de messagerie instantanée IM comprenant des programmes PGM permettant à différents dispositifs du réseau de communiquer entre eux ; à savoir l'ordinateur PC, le téléphone MOB et d'autres dispositifs DISP connectés au réseau RES;
- Des programmes clients, dits premier client et deuxième client, installés respectivement dans l'ordinateur PC et le mobile MOB, comprenant une interface graphique (non représenté) incluant notamment un module de prise en compte du statut du l'utilisateur du dispositif dans lequel se trouve le client.

Le serveur IM comprend en outre des moyens MDF de réception de changements de statuts et des moyens de transmission du nouveau statut d'un utilisateur aux programmes clients intéressés par cette information.

Nous ne rentrerons pas dans les détails de fonctionnement d'une messagerie instantanée car sans intérêt pour l'illustration de l'invention. D'ailleurs un autre outil de communication interpersonnelle aurait pu être utilisé en lieu et place de la messagerie instantanée.

Dans notre exemple, l'ordinateur PC et le téléphone MOB sont aptes à être utilisés par un utilisateur UT.

Dans notre exemple, le module MOD comprend des moyens de réception du statut des utilisateurs et des mises à jour de statut reçues depuis le serveur IM.

On considère dans notre exemple, que l'utilisateur peut avoir plusieurs états relativement à l'outil de communication interpersonnelle. Dans notre exemple, ces statuts sont
- "En ligne" signifiant que l'utilisateur est en cours d'utilisation de l'outil de communication interpersonnelle ;
- "hors ligne" signifiant que signifiant que l'utilisateur n'utilise pas l'outil de communication interpersonnelle.

L'invention ne se limite pas à ces deux statuts mais s'étend naturellement à d'autres statuts.

Selon l'invention, à chaque statut correspond un lieu de stockage d'un contenu. L'utilisateur UT construit préalablement une table de correspondance par exemple la suivante qui associe pour un état donné une action à réaliser. La table est la suivante:

| Terminal/Statut de l'utilisateur | En Ligne |
|---|---|
| PC | CNT sur PC |
| MOB | CNT sur MOB |

Cette table signifie que l'utilisateur UT souhaite que le contenu CNT soit stocké et accessible sur l'ordinateur PC si le statut est "En ligne" vis-à-vis de l'ordinateur PC. De la même manière, l'utilisateur UT souhaite que le contenu soit stocké sur le téléphone MOB si le statut est "En ligne" vis-à-vis du téléphone. L'illustration se limite à la table décrite ci-dessus ; cependant, le nombre de statuts et le nombre d'actions à prévoir en fonction du statut peuvent naturellement être plus important.

Les étapes d'un premier exemple de réalisation de l'invention vont être décrites en référence aux figures 1, 2, 3 et 4.

Lors d'une première phase PH1, on considère que la figure 1 est une vue du système à l'instant "t". On suppose que le contenu CNT est stocké sur l'ordinateur PC à cet instant "t".

Cette première phase PH1 comprend les étapes suivantes référencées ET1n (n=1 à 4):
Lors d'une première étape ET11, l'utilisateur UT met sous tension son ordinateur PC et exécute le premier programme client CL1. Le statut de l'utilisateur UT vis-à-vis de l'ordinateur PC est "En Ligne".
Lors d'une deuxième étape ET12, le premier client CL1 compris dans l'ordinateur PC notifie, au moyen d'une première notification NTF1, au serveur IM le statut "En Ligne".
Lors d'une troisième étape ET13, le serveur reçoit la première notification NTF1 et émet en retour au moyen d'une deuxième notification NTF2 le statut "En Ligne" aux dispositifs intéressés par le statut à savoir dans notre exemple le téléphone MOB, le module MOD et aux autres dispositifs DISP faisant partie des contacts de l'utilisateur UT.
Lors d'une quatrième étape ET14, le module MOD reçoit le statut "En ligne" de l'utilisateur vis-à-vis de l'ordinateur PC. Dans notre exemple, le module MOD stocke la table décrite précédemment. Il peut, à ce titre, vérifier où doit être stocké le contenu CNT en fonction du statut reçu. Le module constate que le contenu CNT doit être stocké sur l'ordinateur dans cette configuration, or le contenu est stocké sur l'ordinateur PC. Le module ne requiert dans ce cas aucun déplacement de contenu d'un dispositif vers un autre.

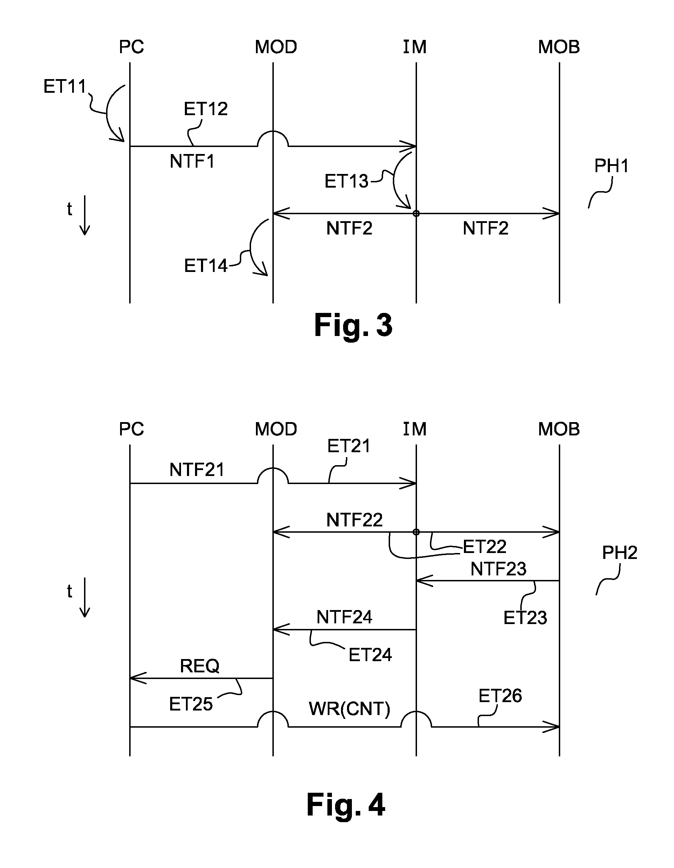

Ensuite, au cours d'une deuxième phase PH2, le statut de l'utilisateur va changer. Son statut vis-à-vis de l'ordinateur va passer du statut "En Ligne" au statut "Hors Ligne" et son statut vis-à-vis du téléphone va passer du statut "Hors Ligne" au statut "En Ligne". Les figures 2 et 4 illustrent cette deuxième phase.

La figure 2 est la même que la figure 1 à la différence que cette figure est une vue schématique du système à un instant ultérieur "t+T1". A cet instant "t+T1", l'utilisateur a éteint l'ordinateur et utilise le téléphone MOB.

Les étapes ET2n (n = 1 à 6) qui suivent sont relatives à la deuxième phase PH2.

Lors d'une première étape ET21, le nouveau statut "Hors ligne" vis-à-vis de l'ordinateur est notifié au moyen d'une première notification NTF21, au serveur IM.

Lors d'une deuxième étape ET22, le serveur notifie au moyen d'une deuxième notification NTF22 le nouveau statut. Dans notre exemple, cette notification est émise au moins vers le module MOD.

Dans notre exemple, à ce stade, le statut vis-à-vis du téléphone MOB est modifié. Le statut est modifié par exemple par ce que l'utilisateur à exécuté le deuxième client CL2 présent sur le téléphone afin de communiquer au moyen de son téléphone.

Lors d'une troisième étape ET23, le deuxième client CL2 notifie au serveur IM, au moyen d'une troisième notification NT23, le nouveau statut "En ligne" vis-à-vis du téléphone.

Lors d'une quatrième étape ET24, le serveur notifie au moyen d'une quatrième notification NTF24 le nouveau statut "En ligne" vis-à-vis du téléphone MOB. Dans notre exemple, le serveur notifie ce nouveau statut au moins au module MOD.

A réception, le module MOD consulte la table décrite précédemment. La table indique que, lorsque le statut est "En Ligne" vis-à-vis du téléphone MOB, le contenu doit être stocké sur le téléphone. Or, à ce stade, le contenu CNT est stocké sur l'ordinateur PC (voir 1^{ère} phase PH1).

Le module requiert donc auprès de l'ordinateur PC, au moyen d'une requête REQ, lors d'une cinquième étape ET25, le transfert du contenu depuis l'ordinateur vers le téléphone MOB.

Lors d'une sixième étape ET26, l'ordinateur émet à destination du téléphone une commande d'écriture WR(CNT) du contenu CNT dans la deuxième mémoire MEM2 présente dans le téléphone MOB.

A ce stade du procédé, le contenu CNT est stocké dans la deuxième mémoire MEM2 du téléphone MOB.

Lors d'une septième étape optionnelle (non représentée), l'utilisateur accède au contenu CNT.

A ce stade du procédé, l'utilisateur peut, s'il le souhaite, déconnecter du réseau RES le téléphone et manipuler le contenu en mode déconnecté.

Un deuxième exemple de réalisation va être décrit ci-dessous en référence aux figures 1, 2, 5 et 6. Dans ce deuxième exemple, le module MOD est apte à intercepter les notifications d'état de présence. L'interception permet d'éviter une attente d'une notification émanant du serveur IM et permet ainsi d'anticiper un transfert d'un contenu.

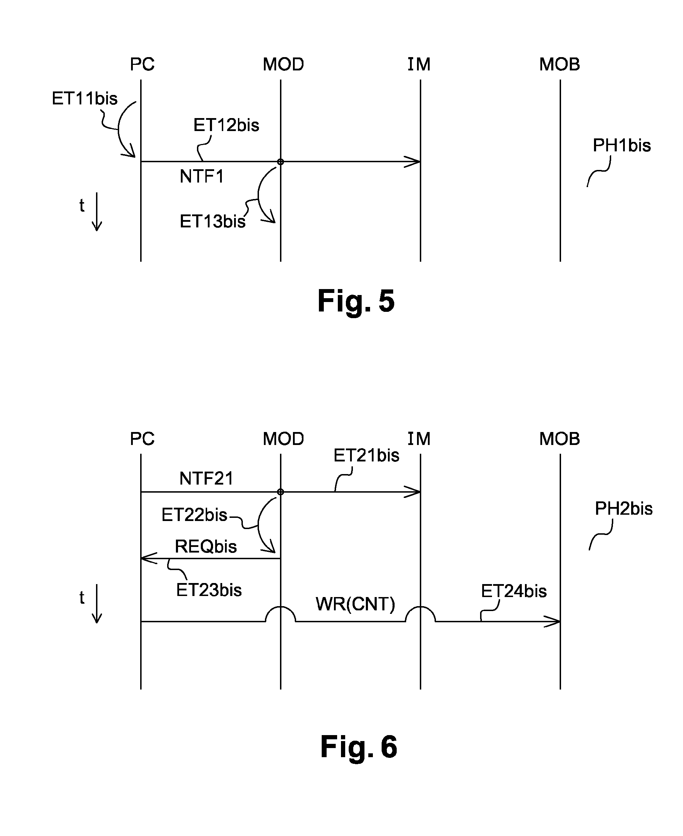

Les phases 1 et 2 décrites précédemment sont modifiées comme suit; la première phase du deuxième mode est décrite en référence à la figure 5.

Cette première phase PH1bis du deuxième mode comprend les étapes ET1nbis (n=1 à 3) suivantes :
Lors d'une première étape ET11bis, l'utilisateur UT met sous tension son ordinateur PC. Le statut de l'utilisateur UT vis-à-vis de l'ordinateur PC est "En Ligne".
Lors d'une deuxième étape ET12bis, le premier client CL1 compris dans l'ordinateur PC notifie, au moyen d'une première notification NTF1, au serveur IM le statut "En Ligne".
Lors d'une troisième étape ET13bis, le module MOD intercepte le statut "En ligne" de l'utilisateur vis-à-vis de l'ordinateur PC. Dans notre exemple, le module MOD stocke la table décrite précédemment. Il peut, à ce titre, vérifier où doit être stocké le contenu CNT en fonction du statut reçu. Le module constate que le contenu CNT doit être stocké sur l'ordinateur dans cette configuration, or le contenu est stocké sur l'ordinateur PC. Le module ne requiert dans ce cas aucun déplacement de contenu d'un dispositif vers un autre.

La deuxième phase PH2bis du deuxième exemple de réalisation est décrite en référence à la figure 6. Cette deuxième phase PH2bis comprend les étapes ET2n (n=1 à 4).

Lors d'une première étape ET21bis, le nouveau statut "Hors ligne" vis-à-vis de l'ordinateur est notifié au moyen d'une première notification NTF21, au serveur IM.

Lors d'une deuxième étape ET22bis, le module intercepte la première notification NTF21. A réception, le module MOD consulte la table décrite précédemment. La table indique que le statut est "En Ligne" vis-à-vis du téléphone MOB, le contenu doit être stocké sur le téléphone. Or, à ce stade, le contenu CNT est stocké sur l'ordinateur PC (voir 1^{ère} phase bis PHibis).

Le module MOD requiert donc au moyen d'une requête REQbis auprès de l'ordinateur PC, lors d'une troisième étape ET23bis, le transfert du contenu depuis l'ordinateur vers le téléphone MOB.

Lors d'une quatrième étape ET24bis, l'ordinateur émet à destination du téléphone une commande d'écriture du contenu CNT dans la deuxième mémoire présente dans le téléphone.

A ce stade du procédé, le contenu CNT est stocké dans la deuxième mémoire.

Lors d'une cinquième étape ET25bis optionnelle, l'utilisateur accède au contenu.

A noter que les deux modes de réalisation décrits précédemment peuvent être utilisés isolément ou en combinaison.

On a vu dans l'exemple qui précède que le contenu CNT est transféré d'un dispositif vers un autre dispositif du système de stockage distribué SYS. Considérons un dispositif source stockant un contenu CNT et un dispositif destinataire du contenu. Dans la présente description, le transfert peut prendre plusieurs formes associées à un avantage respectif.

Une première forme consiste à transférer un contenu en copiant le contenu dans un dispositif cible et en supprimant par la suite le contenu dans le dispositif source. Cette première forme de transfert a pour avantage d'éviter des redondances d'un même contenu dans un système de stockage distribué.

Une deuxième forme consiste à ne pas effacer dans le dispositif source le contenu copié dans le dispositif cible. Cette redondance assure une sauvegarde du contenu en cas de perte du contenu dans le dispositif cible ou source. Cette deuxième forme présente aussi un autre avantage si le contenu doit être transféré dans un sens inverse i.e. du dispositif cible vers le dispositif source. Dans cette configuration, et de préférence dans le cas où le contenu n'a pas été modifié, un transfert consiste en une mise à jour de la table stockée dans le module MOD pour indiquer que le contenu est désormais accessible depuis le dispositif source. Cette deuxième forme est intéressante car ne nécessite qu'une bande passante très faible limitée à l'envoi d'une commande de mise à jour de la table depuis le dispositif destinataire vers le module MOD.

Cette deuxième forme nécessite un ajustement dans le cas de contenu ayant été modifié entre le moment de réception depuis le dispositif destinataire et le renvoi vers le dispositif source. Un mécanisme de synchronisation entre contenus, connu de l'homme du métier, peut être mis en oeuvre afin d'assurer une synchronisation entre le contenu stocké sur le dispositif source er le dispositif destinataire.

Dans les exemples de réalisation qui précèdent, le transfert concernait un contenu. Le contenu est quelconque. Le contenu peut par exemple être un fichier ou un répertoire d'une arborescence. Par exemple, l'utilisateur peut créer un répertoire incluant des répertoires et fichiers personnels et un répertoire incluant des répertoire et fichiers professionnels. Ainsi, le transfert peut concerner l'un ou l'autre des répertoires en fonction du statut de l'utilisateur.

## Revendications

1. Procédé de gestion du lieu de stockage de données dans un système de stockage distribué (SYS) incluant une pluralité de dispositifs (PC,MOB) reliés entre eux par l'intermédiaire d'un réseau (RES), les dispositifs comprenant un lieu de stockage de données respectif (MEM1,MEM2) dans lesquels un utilisateur peut stocker des données, **caractérisé en ce que** la sélection du lieu de stockage de données dans le système est fonction d'une information liée à l'utilisateur du système.

2. Procédé selon la revendication 1, **caractérisé en ce que** l'information est une information liée à l'activité de l'utilisateur vis-à-vis d'un dispositif.

3. procédé de gestion selon la revendication 1, **caractérisé en ce que** l'information correspond à un état défini relativement à un outil de communication interpersonnelle, et **en ce qu'**à un état correspond un lieu de stockage prédéfini.

4. Procédé de gestion selon la revendication 1, **caractérisé en ce qu'**une sélection est suivie d'un transfert de données depuis un lieu de stockage source vers un lieu de stockage destinataire, et **en ce que** suite au transfert, les données stockées dans le dispositif source sont supprimées.

5. Procédé de gestion selon la revendication 1, **caractérisé en ce que**, le système comprenant un module (MOD) apte à gérer le lieu de stockage des données dans le système de stockage distribué (SYS), suite au transfert de données depuis un lieu de stockage source (PC) vers un lieu de stockage destinataire (MOB), les données stockées dans le dispositif source sont conservées, et **en ce que** si un transfert depuis le lieu de stockage destinataire (MOB) et le dispositif source (PC) concernent les mêmes données, ledit transfert comprend une étape de mise à jour du nouveau lieu de stockage.

6. Système de stockage distribué (SYS) incluant une pluralité de dispositifs (PC,MOB), comprenant des moyens de stockage respectifs (MEM1,MEM2), reliés entre eux par l'intermédiaire d'un réseau (RES) et dans lesquels un utilisateur (UT) peut stocker des données, **caractérisé en ce qu'**il comprend un module (MOD) apte à sélectionner un lieu de stockage de données dans le système en fonction d'une information liée à l'utilisateur (UT) du système.

7. Module (MOD) apte à gérer le lieu de stockage de données dans un système de stockage distribué (SYS) incluant une pluralité de dispositifs (PC,MOB) reliés entre eux par l'intermédiaire d'un réseau (RES), les dispositifs comprenant un lieu de stockage de données respectif (MEM1,MEM2) dans lesquels un utilisateur peut stocker des données, **caractérisé en ce qu'**il comprend des moyens de sélection aptes sélectionner un lieu de stockage de données dans le système en fonction d'une information liée à l'utilisateur du système.

8. Programme d'ordinateur comprenant des instructions pour la mise en oeuvre du procédé selon la revendication 1 par un module (MOD), lorsque ce programme est exécuté par un processeur.
